# EUROPEAN PATENT SPECIFICATION

(11) **EP 2 604 931 B1**
(45) Date of publication and mention of the grant of the patent: **22.02.2017**
(21) Application number: 11194078.9
(22) Date of filing: 16.12.2011
(51) Int. Cl.: F24C 7/08

(54) **Method of operating a cooking equipment and cooking equipment**
Verfahren zum Betrieb einer Kochvorrichtung und Kochvorrichtung
Procédé de fonctionnement d'un équipement de cuisson et équipement de cuisson

(43) Date of publication of application: 19.06.2013
(73) Proprietor: ELECTROLUX PROFESSIONAL S.p.A., 33170 Pordenone (IT)
(72) Inventor: Simonato, Michele, 33170 Pordenone (IT); Menosso, Erika, 33080 Porcia (PN) (IT); Marcorin, Paolo, 33170 Pordenone (IT); Furlanetto, Riccardo, 33170 Pordenone (IT); Cescot, Paolo, 33170 Pordenone (IT)
(74) Representative: Electrolux Group Patents

(56) References cited:
- EP-A1- 1 989 978
- EP-A1- 2 189 724
- EP-A1- 2 211 117
- EP-A1- 2 363 646
- DE-A1-102006 008 096

## Description

The present invention relates to a method of operating a cooking equipment and a cooking equipment.

To prepare a buffet a good cooking planning is commonly required. This planning is made up by cooking in sequence all the recipes, usually taking into account only the serving order.

Since the power consumption of professional ovens is all but negligible, minimization of the overall power requirements is a primary target.

At present a method has been proposed to optimize the energy consumption of a single cooking process by controlling the temperature and the time duration of the single cooking process. However, this method minimizes only the energy consumption of individual cooking process and docs not consider the overall energy consumption. Moreover, a similar approach, by acting on the cooking parameters, can worsen the cooking quality.

EP 1 989 978 A1 discloses a method that involves optimizing a sequence of cooking products based on a parameter e.g. cooking product, so that the cooking process is optimized with regard to one of the energy consumed by a cooking appliance, the required time, and weight loss of the cooking product. A loading request in dependence of the entered parameter, and an error message in dependence of the entered parameter, are displayed with the output device. A multiple number of cooking programs are run during the cooking process. An independent claim is also included for a cooking appliance comprises a control or regulating device, which is in working connection with an input device and an output device for performing a cooking process.

EP 2 363 646 discloses a method that method involves dividing the cooking products in guiding-cooking food and a follow-up cooking food, in which the guiding-cooking food is determined by a cooking food brought-in a cooking chamber. The guiding-cooking food is inserted in the cooking chamber for beginning the cooking programs. Multiple cooking products are cooked in the cooking chamber. The cooking products are operated in the cooking chamber with short residual time.

EP 2 211 117 discloses a method that involves using a function device for execution of a program i.e. cooking program. An input device and a display device are designed as a sensor screen or a touch screen of a cooking appliance. Program representatives in the form of virtual vouchers, are arranged in respective areas of the display device, where each area is in the form of a virtual voucher board. Each program representative is changed by touching a part of the area or when moving closer to or away from the part of the area and/or by an input action in a visual presentation. An independent claim is also included for a cooking appliance comprising a heating device.

Therefore, it is an aim of the present invention to determine and follow a best order of preparation of cooking processes which minimizes the total energy consumption.

In compliance with the above aims, according to the present invention there are provided a method of operating a crooking equipment and a cooking equipment as defined in anyone of the appended Claims.

In particular, according to a first aspect thereof, the present invention relates to a method of operating a cooking equipment comprising an oven cavity. a steam generation unit, and at least one energy source, operable to heat food placed inside the oven cavity, wherein the method comprises:
selecting a set of cooking programs to be performed by the cooking equipment from a plurality of cooking programs stored in a first database via a user interface,
sorting the set of cooking programs selected on the basis of energetic constraints via a processing unit,
driving the at least one energy source and the steam generation unit in accordance with the sorted set of cooking programs via a regulating module,
wherein the plurality of cooking programs comprises convective cooking programs and steam cooking programs, and wherein the energetic constraints comprise giving precedence to convective cooking programs with respect to steam cooking programs within the selected set of cooking programs.

According to a second aspect thereof, the present invention relates to a cooking equipment configured to perform such a method.

Each steam cooking program preferably has a starting humidity associated therewith, and the energetic constraints may therefore comprise sorting the steam cooking programs by starting humidity.

In particular, if the cooking programs of the selected set comprise at least two steam cooking programs, the energetic constraints may comprise sorting the steam cooking programs by decreasing starting humidity.

Alternatively, if the cooking programs of the selected set comprise at least two steam cooking programs, the energetic constraints may comprise sorting the steam cooking programs according to a predefined bell-shaped pattern of the starting humidity.

Advantageously, the energetic constraints may comprise sorting the selected set of cooking programs by starting cooking temperature.

In particular, the energetic constraints may comprise sorting the selected set of cooking programs by decreasing starting cooking temperature.

The processing module is also preferably configured to sort the set of cooking programs on the basis of cooking quality constraints, and the method therefore preferably comprises the step of sorting the set of cooking programs on the basis of cooking quality constraints.

The cooking quality constraints may comprise providing for a washing step of the oven cavity after one or more cooking programs.

The cooking quality constraints may comprise, in alternative or in addition, sorting the set of cooking processes by category.

The cooking quality constraints may comprise, in alternative or in addition, excluding one or more cooking programs from sorting.

The processing unit may be configured to determine at least one alternative equivalent cooking program for replacing a respective cooking program of the set of cooking programs so that the temperature difference between subsequent cooking programs is reduced by the alternative equivalent cooking program.

The processing unit may be configured to determine at least one alternative equivalent cooking program for replacing a respective cooking program of the set of cooking programs so that the working time of the steam generation unit is reduced by the alternative equivalent cooking program.

The processing unit may be configured to determine at least one alternative equivalent cooking program for replacing a respective cooking program of the set of cooking programs so that the amount of steam generated by the food during the cooking process is reduced by the alternative equivalent cooking program.

The alternative cooking program may be selected in a group of equivalent courses having similar organoleptic properties as the cooking program to be replaced.

The control device advantageously comprises a second database for storing the cooking quality constraints.

Moreover, the control device advantageously comprises a third database for storing the energetic constraints.

The method may comprise the further step of determining at least one alternative equivalent cooking program for replacing a respective cooking program of the set of cooking programs so that at least one among the temperature difference between subsequent cooking programs, the working time of the steam generation unit and the amount of steam generated by the food during the cooking process is reduced by the alternative equivalent cooking program.

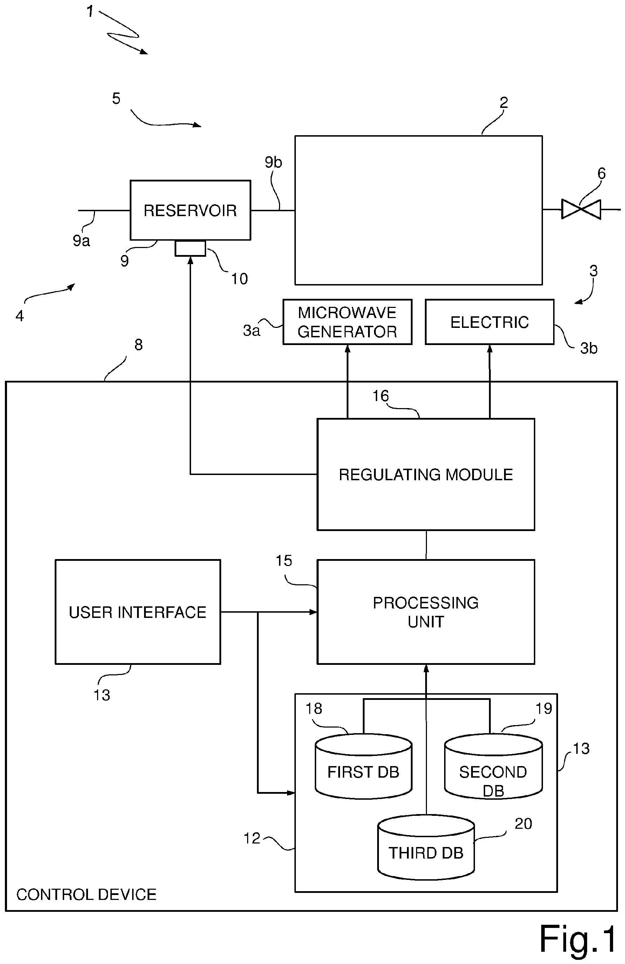

An embodiment of the present invention will now be described, by way of example, with reference to the accompanying Figure 1, which is a simplified block diagram of a cooking equipment according to an embodiment of the present invention.

With reference to Figure 1, referral number 1 indicates as a whole a professional cooking equipment, especially but not exclusively adapted for food services.

The cooking equipment 1 comprises an oven cavity 2, for receiving food to be processed, one or more energy sources 3, at least one steam generation unit 4, for providing steam within the oven cavity 2, a plurality of sensors (not illustrated for sake of simplicity) for measuring process parameters like temperature and humidity within the oven cavity 2, and a control device 8.

In one embodiment, the energy sources 3 comprise a microwave generator 3a, such as a magnetron, and an electrical heater 3b. In another embodiment non illustrated, a gas burner may be provided in place of or in addition to microwave generator 3a and electrical heater 3b. A single energy source may be present.

The energy sources 3 are coupled to the control device 8 and selectively activated and deactivated in accordance with control signal produced by the control device 8. The energy sources 3 are furthermore coupled to the oven cavity 2 for delivering energy and heating food to be processed. When activated, the energy sources 3 provide energy to the food placed in the oven cavity 2, thereby causing the food to heat up.

In the example here described and illustrated, the steam generation unit 4, which may be gas or electrically operated, comprises a water reservoir 9, having an inlet 9a and an outlet 9b that feeds into the oven cavity 2, and an energy source 10. The energy source 10 is coupled to the water reservoir 9 and is operable by the control device 8 to provide a controlled amount of steam to the oven cavity 2. In another embodiment, here not shown, the steam generation unit 4 may comprise nozzles spraying water on electrical heaters or directly into the oven cavity 2.

A throttle valve 6 is operable by the control device 8 to supply fresh air from outside the oven cavity 2. In this way the humidity in the oven cavity 2 may be maintained at a level determined by the cooking program in the control device 8.

The control device 8 comprises a storage unit 12, a user interface 13, a processing unit 15 and a regulating module 16.

The storage unit 12 comprises a first database 18 containing a plurality of cooking programs, a second database 19 containing cooking quality constraints, i.e. rules related to the quality of the cooking process, and a third database 20 containing energetic constraints, i.e. rules related to energy consumption.

In particular, in the first database 18 each cooking program has associated therewith at least a temperature time profile in the food and/or in the cavity 2 and, if required, a humidity time profile in the cavity 2. Each temperature profile has a start cooking temperature TS and an end cooking temperature TE; each humidity profile has a start humidity HS and an end humidity HE.

In case the cooking process occurs using a sensor for measuring internal temperature of a piece of food (commonly a probe, preferably needle-like), also the food internal temperature profile is stored in the first database 18 to define the cooking process.

Moreover, if certain actions must be performed during the cooking process (e.g. adding ingredients), also their chronological sequence becomes part of the definition of the cooking process in the first database 18.

Preferably, in the first database 18, all the cooking programs are classified in groups of equivalent courses having similar organoleptic properties.

Preferably, in the first database 18 also one or more washing steps of the oven cavity 2 are defined as cooking programs, which are therefore characterized by a temperature and/or humidity profile.

Moreover, if certain actions must be performed during the washing process (e.g. adding detergents), also their chronological sequence becomes part of the definition of the washing process in the first database 18.

The second database 19 contains a plurality of cooking quality constraints which are substantially rules of priority of different cooking processes that take into account only food quality aspects.

For example, the second database 19 contains the cooking quality constraints of providing for a washing step of the oven cavity 2 after one or more cooking programs. This constraint is useful when a cooking process dirties the oven cavity 2 in such a way that the organoleptic properties of the food during the following cooking processes may be altered. This is the case of roast cooking processes, such as roast chicken, roast meat, etc.

The second database 19 contains also the cooking quality constraint of sorting by category the cooking processes. For example, non-roasted cooking programs have precedence with respect to all the roasted cooking programs in order to avoid the alteration of food during the non-roasted cooking program, or fish cooking programs must precede meat cooking programs.

Additionally the second database 19 contains also the cooking quality constraint of excluding from sorting one or more cooking programs and performing said excluded cooking programs in a sequence defined by the user (e.g. at the beginning, in the middle, at the end of the sequence) .

This constraint is useful for example for cooking programs which require the presence of the chef and must be performed when the chef is available.

Preferably, the cooking quality constraints are stored in the second database 19. According to an embodiment of the present invention, new cooking quality constraints could be created by the user and stored in the second database 19 through the interface 13.

The third database 20 contains a plurality of energetic constraints which are substantially rules of priority of different cooking processes that take into account only energy saving aspects.

The plurality of energetic constraints contains the constraint of giving precedence to convective cooking programs with respect to steam cooking programs within the selected set of cooking programs, wherein "convective cooking programs" designates cooking programs which do not involve use of the steam generation unit 4, while "steam cooking programs" designates cooking programs in which the steam generation unit 4 is used alone or in combination with the energy source(s) 3.

In this way, during execution of the convective cooking programs, the steam generation unit 4 is passively preheated with great advantages in terms of energy saving.

The plurality of energetic constraints comprises the constraint of sorting the selected cooking programs by a decreasing start cooking temperature. This constraint is applicable both to convective cooking programs and to steam cooking programs.

In this way, the temperature variations between cooking processes are minimized and the thermal inertia of the oven cavity 2 is fully exploited. In fact, the time necessary for pre-heating the oven cavity 2 is reduced because the start cooking temperature conditions of the oven cavity 2 are closer to the start cooking temperature conditions required for performing the next cooking program (except for the first executed cooking program for which a complete and standard preheating step is required).

Moreover, if the sorting of the cooking processes is made by decreasing start cooking temperature, the opening of the oven cavity 2, which is unavoidable between subsequent cooking processes and which determines a drop in temperature, acts in the correct direction. Sometimes, the drop in temperature due to the opening of the oven cavity 2 at the end of a cooking process is sufficient to reach the start cooking temperature of the next cooking process, so pre-heating is avoided.

The plurality of energetic constraints comprises also the constraint of sorting the selected cooking programs by decreasing cooking humidity and the constraint of sorting the selected cooking programs according to a predefined bell-shaped pattern of the cooking humidity (i.e. a pattern where the humidity is first rising up to a maximum and then decreasing).

The choice among different constraints of sorting the steam cooking programs (decreasing start cooking temperature vs. decreasing cooking humidity vs. bell shaped pattern) is preferably made on the basis of the features of the steam generation unit.

In the illustrated embodiment, in which the steam generation unit 4 includes a reservoir 9, the constraint of sorting cooking programs according to a predefined bell shaped pattern of the cooking humidity guarantees energy saving. Steam generation, when performed by a steam generation unit 4, results in a gradual increasing in the mass flow rate of steam generated till the reaching of a steady mass flow rate. After the switching off of the steam generation unit 4 the mass flow rate will gradually decrease. The plot of mass flow rate vs. time will assume the pattern of a bell. Sorting cooking programs according to predefined bell shape pattern will guarantee a good match between the generated steam and the required steam. In this way there is no risk of wasting steam in excess.

In another embodiment not illustrated, the steam generation unit comprises nozzles spraying water on electrical heaters or directly into the oven cavity, without using a reservoir. In this case, best performances in terms of energy saving are obtained by sorting by decreasing cooking temperature.

The user interface 13 is operable to select a set of cooking programs to be performed by the cooking equipment 1 from the plurality of cooking programs stored in the first database 18.

The user interface 13 is coupled to the storage unit 12 and to the processing unit 15 and provides input and selection functions.

For example, the user interface 13 may allow to select a set of cooking programs to be performed, to define a number of iterations for the selected cooking programs, to set parameters of the selected set of cooking programs (e.g. cooking level, browning), to store new cooking programs in the first database 18, to select cooking quality constraints in the second database 19 to be applied, to store new cooking quality constraints in the second database 19.

The processing unit 15 is configured to sort the set of cooking programs selected through the user interface 13 on the basis the cooking quality constraints contained in the second database 19 and on the basis of the energetic constraints contained in the third database 20.

In particular, the processing unit 15 is configured to sort the set of cooking programs on the basis of default cooking quality constraints, of cooking quality constraints selected by the user through the interface 13 and of energetic constraints contained in the database 20.

The processing unit 15 is preferably configured to also determine and suggest, through the interface 13, alternative equivalent cooking programs for replacing at least one cooking program of the sorted sequence of cooking programs, if alternative equivalent cooking programs reduce overall energy consumption of the set. The alternative cooking program suggested by the processing unit 15 is selected in the groups of equivalent courses having similar organoleptic properties as the cooking program to be replaced and reduces the temperature difference between subsequent cooking programs.

The regulating module 16 is configured to drive the at least one energy source 3 and the steam generation unit 4 in accordance with the sequence of the set of cooking programs determined by the processing unit 15.

In order to achieve accurate control of the cooking process, the regulating module 16 is configured also to receive measurement signals from the sensors (not illustrated) and to drive the energy sources 3, the steam generation unit 4 and the throttle valve 6 to follow temperature and humidity profiles of the cooking program determined by the processing unit 15.

In use, the user selects, through the user interface 13, the cooking programs planned for the day (usually at the beginning of the day) and may select the cooking quality constraints to be applied to the selected sequence (e.g. washing step after roasted food; leave dessert as last cooking; fish must precede meat preparations).

The processing unit 15 sorts the set of cooking programs selected through the user interface 13 on the basis of the energetic constraints contained in the database 20 and, preferably, also on the basis of the cooking quality constraints selected, and the regulating module 16 drives the energy source(s) 3 and the steam generation unit 4 in accordance with the sequence of cooking programs determined by the processing unit 15.

Here below are described three examples of sorting made by the processing unit 15, wherein convective cooking programs are indicated as Cn (where n is the start cooking temperature, expressed in °C in the following), and steam cooking programs are indicated as Sn/m (where n is the start cooking temperature and m is the cooking humidity).

Given the cooking programs C120, C200, C250, S100/100, and S150/80 S200/50, the possible sequences suggested by the processing unit are:
- C250, C200, C120, S100/100, S150/80, S200/50: in this case the energetic constraints considered are: giving precedence to convective cooking programs with respect to steam cooking programs, sorting the convective cooking programs by decreasing start cooking temperature and sorting the steam cooking programs by decreasing cooking humidity;
- C250, C200, C120, S200/50, S150/80, S100/100: in this case the energetic constraints considered are: giving precedence to convective cooking programs with respect to steam cooking programs, sorting the convective and steam cooking programs by decreasing start cooking temperature;
- C250, C200, C120, S200/50, S100/100, S150/80 in this case the energetic constraints considered are: giving precedence to convective cooking programs with respect to steam cooking programs, sorting the convective cooking programs by decreasing start cooking temperature and sorting the steam cooking programs according to a predefined bell-shaped pattern of the cooking humidity.

The cooking equipment and the method described above advantageously allow to determine the sequence of cooking programs which get faster cooking and minimum energy consumption.

The energetic constraint of sorting by decreasing temperature, in fact, reduces the preheating time between subsequent cooking processes, achieving a shorter global working time. Moreover, the constraint of sorting by decreasing temperature exploits the thermal inertia in order to minimize energy consumption and heating source(s) 3 regulation.

The energetic constraint of giving precedence to convective cooking programs with respect to steam cooking programs reduces the preheating time of the reservoir, as the reservoir is passively heated during convective cooking programs.

Clearly, changes may be made to the cooking equipment and to the method as described herein without, however, departing from the scope of the present invention as defined in the appended claims.

## Claims

1. Method of operating a cooking equipment (1), the cooking equipment (1) comprising an oven cavity (2), a steam generation unit (4), and at least one energy source (3), operable to heat food placed inside the oven cavity (2); the method comprising:
selecting a set of cooking programs to be performed by the cooking equipment (1) from a plurality of cooking programs stored in a first database (18) via a user interface (13);
sorting the set of cooking programs selected on the basis of energetic constraints via a processing unit (15);
driving the at least one energy source (3) and the steam generation unit (4) in accordance with the sorted set of cooking programs via a regulating module (16);
**characterized in that**
the plurality of cooking programs comprises convective cooking programs and steam cooking programs, and wherein the energetic constraints comprise giving precedence to convective cooking programs with respect to steam cooking programs within the selected set of cooking programs.

2. Method according to Claim 1, wherein steam cooking programs comprise at least a starting humidity, and wherein the energetic constraints comprise sorting the steam cooking programs by starting humidity.

3. Method according to anyone of claims 1 or 2, wherein the energetic constraints comprise, if the cooking programs of the selected set comprise at least two steam cooking programs, sorting the steam cooking programs by decreasing starting humidity.

4. Method according to anyone of claims from 1 to 3, wherein the energetic constraints comprise, if the cooking programs of the selected set comprise at least two steam cooking programs, sorting the steam cooking programs according to a predefined bell-shaped pattern of the starting humidity.

5. Method according to anyone of Claims from 1 to 4, wherein the energetic constraints comprise sorting the selected set of cooking programs by starting cooking temperature.

6. Method according to Claim 5, wherein the energetic constraints comprise sorting the selected set of cooking programs by decreasing starting cooking temperature.

7. Method according to anyone of Claims from 1 to 6, wherein the step of sorting the set of cooking programs selected comprises, in addition to sorting the set of cooking programs on the basis of energetic constraints, sorting the set of cooking programs on the basis of cooking quality constraints.

8. Method according to Claim 7, wherein the cooking quality constraints comprise providing for a washing step of the oven cavity (2) after one or more cooking programs.

9. Method according to Claim 7 or 8, wherein the cooking quality constraints comprise sorting the set of cooking processes by category.

10. Method according to anyone of the Claims from 1 to 9, comprising the step of determining at least one alternative equivalent cooking program for replacing a respective cooking program of the set of cooking programs so that at least one among the temperature difference between subsequent cooking programs, the working time of the steam generation unit and the amount of steam generated by the food during the cooking process is reduced by the alternative equivalent cooking program.

11. A cooking equipment configured to perform a method according to one or more of claims 1 to 10.

## Patentansprüche

1. Verfahren zum Betrieb einer Kochvorrichtung (1), wobei die Kochvorrichtung (1) eine Herdkammer (2), eine Dampferzeugungseinheit (4) und wenigstens eine Energiequelle (3), die zur Erwärmung von Nahrungsmitteln, die in der Herdkammer (2) platziert wurden, bedienbar ist, umfasst;
wobei das Verfahren das Folgende umfasst:
Auswählen eines Satzes von Kochprogrammen, die von der Kochvorrichtung (1) ausgeführt werden sollen, aus einer Vielzahl von Kochprogrammen, die in einer ersten Datenbank (18) gespeichert sind, über eine Benutzerschnittstelle (13);
Sortieren des ausgewählten Satzes von Kochprogrammen auf Basis von energetischen Zwängen über eine Steuereinheit (15);
Antreiben der wenigstens einen Energiequelle (3) und der Dampferzeugungseinheit (4) gemäß dem sortierten Satz von Kochprogrammen über ein Regelmodul (16);
**dadurch gekennzeichnet, dass** die Vielzahl von Kochprogrammen konvektive Kochprogramme und Dampfkochprogramme umfasst, und wobei die energetischen Zwänge umfassen, dass konvektiven Kochprogrammen in Bezug auf Dampfkochprogramme innerhalb des ausgewählten Satzes von Kochprogrammen Vorrang eingeräumt wird.

2. Verfahren nach Anspruch 1, wobei Dampfkochprogramme wenigstens eine Anfangsfeuchte umfassen, und wobei die energetischen Zwänge das Sortieren der Dampfkochprogramme nach der Anfangsfeuchte umfassen.

3. Verfahren nach einem der Ansprüche 1 oder 2, wobei die energetischen Zwänge das Sortieren der Dampfkochprogramme nach abnehmender Anfangsfeuchte umfassen, wenn die Kochprogramme des ausgewählten Satzes wenigstens zwei Dampfkochprogramme umfassen.

4. Verfahren nach einem der Ansprüche 1 bis 3, wobei die energetischen Zwänge das Sortieren der Dampfkochprogramme nach einem vordefinierten glockenförmigen Muster der Anfangsfeuchte umfassen, wenn die Kochprogramme des ausgewählten Satzes wenigstens zwei Dampfkochprogramme umfassen.

5. Verfahren nach einem der Ansprüche 1 bis 4, wobei die energetischen Zwänge das Sortieren des ausgewählten Satzes von Kochprogrammen nach der Anfangskochtemperatur umfassen.

6. Verfahren nach Anspruch 5, wobei die energetischen Zwänge das Sortieren des ausgewählten Satzes von Kochprogrammen nach abnehmender Anfangskochemperatur umfassen.

7. Verfahren nach einem der Ansprüche 1 bis 6, wobei der Schritt des Sortierens des ausgewählten Satzes von Kochprogrammen, zusätzlich zum Sortieren des Satzes von Kochprogrammen auf Basis von energetischen Zwängen, das Sortieren des Satzes von Kochprogrammen auf Basis von Kochqualitätszwängen umfasst.

8. Verfahren nach Anspruch 7, wobei die Kochqualitätszwänge die Bereitstellung eines Reinigungsschritts der Herdkammer (2) nach einem oder mehreren Kochprogrammen umfassen.

9. Verfahren nach Anspruch 7 oder 8, wobei die Kochqualitätszwänge das Sortieren des Satzes von Kochprozessen nach Kategorie umfassen.

10. Verfahren nach einem der Ansprüche 1 bis 9, umfassend den Schritt des Bestimmens wenigstens eines alternativen äquivalenten Kochprogramms als Ersatz für ein jeweiliges Kochprogramm des Satzes von Kochprogrammen, so dass wenigstens eines des Temperaturunterschieds zwischen nachfolgenden Kochprogrammen, der Arbeitszeit der Dampferzeugungseinheit und der vom dem Nahrungsmittel während des Kochprozesses erzeugten Dampfmenge von dem alternativen äquivalenten Kochprogramm reduziert wird.

11. Kochvorrichtung, die dazu ausgelegt ist, ein Verfahren nach einem oder mehreren der Ansprüche 1 bis 10 auszuführen.

## Revendications

1. Procédé de fonctionnement d'un équipement de cuisson (1), l'équipement de cuisson (1) comprenant une cavité de four (2), une unité de génération de vapeur (4), et au moins une source d'énergie (3), actionnable pour chauffer un aliment placé à l'intérieur de la cavité de four (2);
le procédé comprenant les étapes suivantes:
sélectionner un ensemble de programmes de cuisson à exécuter par l'équipement de cuisson (1) parmi une pluralité de programmes de cuisson stockés dans une première base de données (18) par l'intermédiaire d'une interface d'utilisateur (13);
trier l'ensemble de programmes de cuisson sélectionnés sur la base de contraintes énergétiques par l'intermédiaire d'une unité de traitement (15); et
activer ladite au moins une source d'énergie (3) et l'unité de génération de vapeur (4) selon l'ensemble trié de programmes de cuisson par l'intermédiaire d'un module de régulation (16),
**caractérisé en ce que** la pluralité de programmes de cuisson comprend des programmes de cuisson par convection et des programmes de cuisson à la vapeur, et dans lequel les contraintes énergétiques comprennent l'octroi d'une préséance aux programmes de cuisson par convection par rapport aux programmes de cuisson à la vapeur à l'intérieur de l'ensemble sélectionné de programmes de cuisson.

2. Procédé selon la revendication 1, dans lequel les programmes de cuisson à la vapeur comprennent au moins une humidité de départ, et dans lequel les contraintes énergétiques comprennent le tri des programmes de cuisson à la vapeur sur la base de l'humidité de départ.

3. Procédé selon l'une quelconque des revendications 1 ou 2, dans lequel les contraintes énergétiques comprennent, si les programmes de cuisson de l'ensemble sélectionné comprennent au moins deux programmes de cuisson à la vapeur, le tri des programmes de cuisson à la vapeur en diminuant l'humidité de départ.

4. Procédé selon l'une quelconque des revendications 1 à 3, dans lequel les contraintes énergétiques comprennent, si les programmes de cuisson de l'ensemble sélectionné comprennent au moins deux programmes de cuisson à la vapeur, le tri des programmes de cuisson à la vapeur en fonction d'un motif prédéfini en forme de cloche de l'humidité de départ.

5. Procédé selon l'une quelconque des revendications 1 à 4, dans lequel les contraintes énergétiques comprennent le tri de l'ensemble sélectionné de programmes de cuisson sur la base de la température de cuisson de départ.

6. Procédé selon la revendication 5, dans lequel les contraintes énergétiques comprennent le tri de l'ensemble sélectionné de programmes de cuisson en diminuant la température de cuisson de départ.

7. Procédé selon l'une quelconque des revendications 1 à 6, dans lequel l'étape de tri de l'ensemble sélectionné de programmes de cuisson comprend, en plus du tri de l'ensemble de programmes de cuisson sur la base de contraintes énergétiques, le tri de l'ensemble de programmes de cuisson sur la base de contraintes de qualité de cuisson.

8. Procédé selon la revendication 7, dans lequel les contraintes de qualité de cuisson comprennent l'exécution d'une étape de lavage de la cavité de four (2) après un ou plusieurs programme(s) de cuisson.

9. Procédé selon la revendication 7 ou 8, dans lequel les contraintes de qualité de cuisson comprennent le tri de l'ensemble des processus de cuisson par catégorie.

10. Procédé selon l'une quelconque des revendications 1 à 9, comprenant l'étape consistant à déterminer au moins un programme de cuisson équivalent alternatif pour remplacer un programme de cuisson respectif de l'ensemble de programmes de cuisson de telle sorte qu'au moins un critère parmi la différence de température entre des programmes de cuisson suivants, le temps de travail de l'unité de génération de vapeur et la quantité de vapeur générée par l'aliment pendant le processus de cuisson soit réduit par le programme de cuisson équivalent alternatif.

11. Equipement de cuisson configuré de manière à exécuter un procédé selon une ou plusieurs des revendications 1 à 10.
